# EUROPEAN PATENT SPECIFICATION

(11) **EP 1 593 555 B1**
(45) Date of publication and mention of the grant of the patent: **04.05.2011**
(21) Application number: 05101143.5
(22) Date of filing: 16.02.2005
(51) Int. Cl.: B60R 21/01

(54) **Tilt alarm**
Kipp-Alarm
Alarme d'avertissement de basculement

(30) Priority: 16.03.2004 SE 4006540
(43) Date of publication of application: 09.11.2005
(73) Proprietor: Scania CV AB (publ), 151 87 Södertälje (SE)
(72) Inventor: Bersten, Fredrik, 155 34 Nykvarn (SE)
(74) Representative: Thum, Bernhard

(56) References cited:
- EP-A- 0 994 009
- WO-A-2004/109326
- US-A- 5 623 410
- US-A- 6 081 188
- US-A- 6 130 608
- US-A1- 2002 165 654
- US-B1- 6 397 133
- PATENT ABSTRACTS OF JAPAN vol. 1996, no. 09, 30 September 1996 (1996-09-30) & JP 08 119582 A (KOMATSU LTD; KOMATSU MEC CORP), 14 May 1996 (1996-05-14)

## Description

### THE BACKGROUND OF THE INVENTION AND PRIOR ART

The present invention relates generally to detection of illicit tilting or tipping actions performed in respect of a motor vehicle. More particularly the invention relates to an arrangement according to claim 1, and a motor vehicle according to claim 3. The invention also relates to a method of detecting an unauthorized tilting of a vehicle according to claim 4, and a computer readable medium according to claim 6.

In order to improve the efficiency and flexibility, the automotive industry has developed towards an increased use of network solutions for controlling various kinds of units and processes in the vehicles. For instance, the Controller Area Network (CAN), the Time Triggered CAN (TTCAN), the FlexRay, the Media Oriented System Transport (MOST) and the ByteFlight standards specify means of accomplishing these types of networks in trucks, busses and other motor vehicles. By means of a CAN, or a similar network, a very large number of vehicle functions may be accomplished based on relatively few electrical control units (ECUs). Namely, by combining resources from two or more ECUs a flexible and efficient over-all vehicular design is obtained.

For instance, a wide variety of theft and intrusion alarms may be accomplished by means of these types of vehicular networks. Of course, it is key that any alarm ECUs included in such a system cannot be manipulated by unauthorized personnel, particularly not when the alarm is active. Consequently, the alarm ECU/s should be positioned so that it/they is/are as physically inaccessible as possible. In the case of a truck, this typically means that the unit/s in question is/are placed under the cab. Then, the alarm ECU/s can only be accessed by tilting the entire cab module. Therefore, in order to prevent the alarm ECU/s from being manipulated improperly, any suspected maneuvers in respect of the cab, such as tilting or inclination, must be detectable.

The prior art includes many examples of solutions as how to detect tilts or angular rate accelerations of a moving vehicle, which may result in that the vehicle skids or rolls over.

For instance, US, B2, 6,600,985 describes a roll sensor system for a vehicle, wherein an accelerometer and an angular rate sensor are used to trigger a safety system in the vehicle if a roll condition occurs.

US, A, 6,130,608 discloses a lateral acceleration detecting device for vehicles, which measures lateral g-forces experienced by a vehicle. An indicator means here signals to the driver whenever g-forces of a certain magnitude are registered, so that the driver may adjust his/her driving accordingly.

US, A, 6,081,188 describes another vehicular hazard warning system, wherein a number of ECU-controller sensors emit alarm signals to a warning controller which, in turn, displays a warning to the driver if a potentially perilous driving condition occurs. For instance, said sensors register the vehicle's acceleration and tilt angles.

The prior art document US 4,651,128 describes a method of monitoring the inclination of a complete motor vehicle by measuring the inclination during successive time periods with an inclination sensitive sensor to produce measured signals. The measured signals are converted into digital form and averaged thereafter during the initial predetermined time in order to form a reference signal. Subsequent digital signals are compared to the reference signal to form a deviation signal which is used for triggering an alarm when a plurality of the digital signals deviate from the reference signal by more than a predetermined tolerance value. Moreover, this document discloses to provide an oscillation window to prevent triggering of the alarm during natural oscillation of the vehicle.

Hence, many alternative solutions exist for registering vehicle tilting actions, which are indicative of an unsafe driving situation. However there is yet no satisfying solution that renders it possible to detect and indicate an unauthorized tilting of a part of a stationary vehicle.

### SUMMARY OF THE INVENTION

The object of the present invention is therefore to provide a solution, which solves the above-mentioned problem, and thus offers an efficient tilt alarm for stationary vehicles.

According to one aspect of the invention, the object is achieved by an arrangement for detecting an unauthorized tilting of a cab of a stationary motor vehicle according to claim 1. The arrangement includes a tilt sensor, which is adapted to register a tilt angle of the cab in relation to a frame rail reference plane. If the tilt angle exceeds a threshold angle in relation to the frame rail reference plane, the tilt sensor is adapted to produce a trigger signal. An alarm signal generator of the arrangement is adapted to activate an alarm in response to this trigger signal.

An important advantage attained by this arrangement is that by selecting a suitable threshold angle and an appropriate frame rail reference plane, a very reliable and robust alarm function may be attained.

Moreover, the tilt sensor is adapted to compensate for any biasing of the frame rail reference plane in relation to a horizontal plane, which is parallel to the mean sea level. Hence, the tilt sensor produces the trigger signal irrespective of the vehicle's spatial orientation. This is advantageous because thereby, for example the fact that the vehicle is located in a slope does not affect the alarm's sensitivity.

According to the invention, the alarm signal generator includes a filter unit, which is adapted to receive the trigger signal, process the trigger signal according to a filtering algorithm, and activate the alarm in response to a result of the processing. Such a filter unit is desirable, since it lowers the risk of false alarms.

According to the invention, the filtering algorithm is adapted to activate the alarm only if the trigger signal indicates that the threshold angle has been exceeded during a predetermined interval. This is advantageous because thereby the risk of false alarms is further reduced.

According to yet another aspect of the invention, the object is achieved by a motor vehicle, which includes this arrangement.

According to still another aspect of the invention, the object is achieved by a method according to claim 4. Hence, a very reliable and robust alarm procedure is attained.

According to one embodiment of the invention the method involves compensating for any biasing of the frame rail reference plane in relation to a horizontal plane being parallel to the mean sea level. Thereby, the sensitivity of the alarm becomes independent of the vehicle's spatial orientation. This is generally desirable because the vehicle may be located in a slope, or by other means be positioned non-horizontally.

According to the invention, the method involves processing the trigger signal according to a filter algorithm, and activating the alarm in response to a result of the processing. The filtering algorithm in volves activating the alarm only if trigger signal indicates that the threshold angle has been exceeded during a predetermined interval. Namely, the risk of false alarms is reduced.

According to another aspect of the invention the object is achieved by a computer readable medium, having a program recorded thereon, where the program is to make a computer control the above proposed method.

### BRIEF DESCRIPTION OF THE DRAWINGS

The present invention is now to be explained more closely by means of embodiments, which are disclosed as examples, and with reference to the attached drawings.
- Figure 1: schematically shows a motor vehicle which includes an arrangement according to an embodiment of the invention,
- Figure 2: shows a block diagram over an arrangement according to an embodiment of the invention,
- Figure 3: illustrates how a proposed threshold angle and a reference plane affect the trigger signal used to activate the alarm,
- Figures 4a, b: illustrate a proposed compensation strategy for handling any biasing of the reference plane,
- Figure 5: is a graph which exemplifies when the alarm is activated according to an embodiment of the invention, and
- Figure 6: shows a flow diagram which illustrates the general method according to the invention.

### DESCRIPTION OF EMBODIMENTS OF THE INVENTION

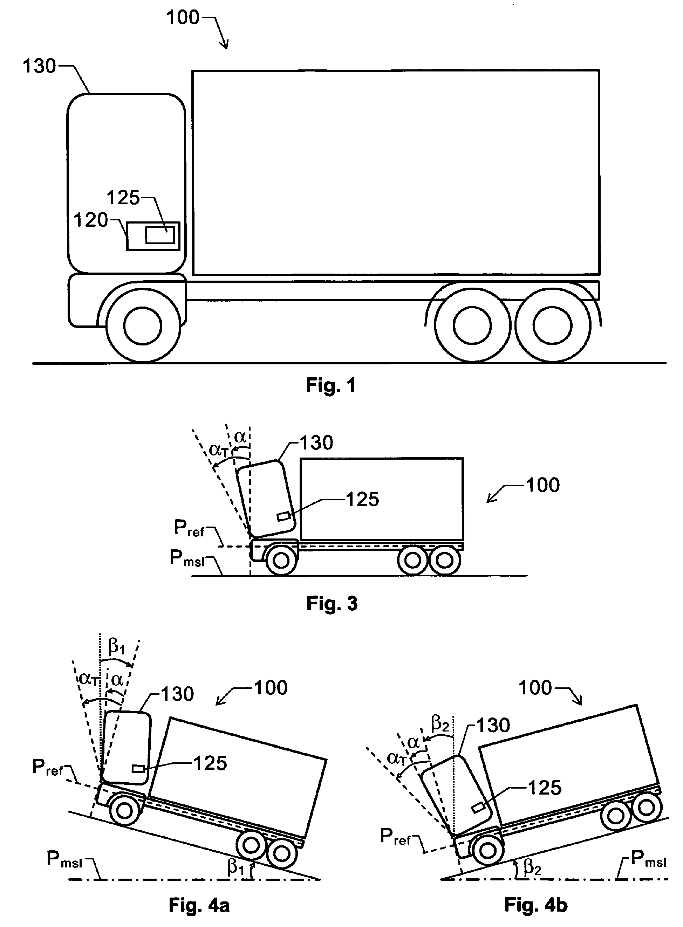

A motor vehicle in the form of a truck 100 is shown in figure 1. The truck 100 includes an ECU 120, which in turn is associated with an alarm arrangement 125. This arrangement 125 is adapted to detect an unauthorized tilting of the ECU 120, such that whenever the arrangement 125 is set, an alarm will be activated if the ECU 120, or a cab 130 in which it is mounted, is tilted to a certain degree. We here presume that the truck 100 is stationary, for example being located in a parking- or cargo area, and therefore is not subjected to any tilt- or roll forces due to driving maneuvers.

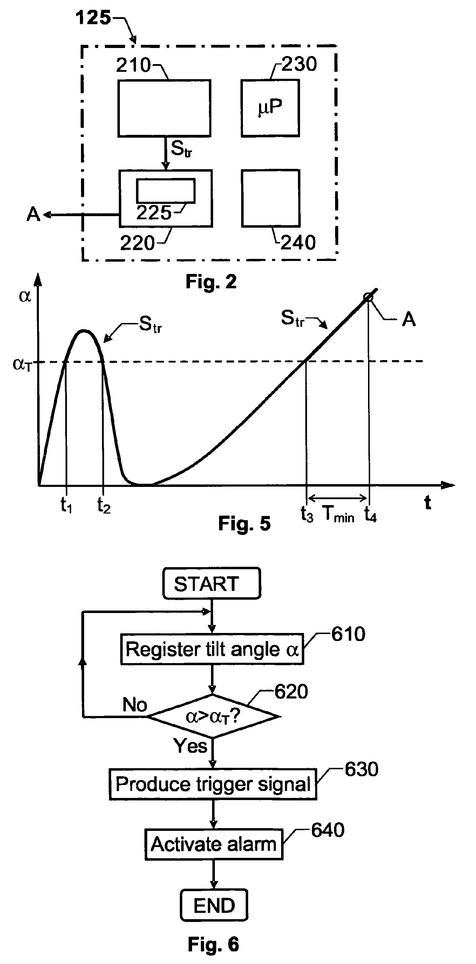

A block diagram in figure 2 shows the arrangement 125, which includes a tilt sensor 210 and an alarm signal generator 220. The arrangement 125 may also include a processor 230 and a memory unit 240 for controlling the operation of the tilt sensor 210 and the alarm signal generator 220. The tilt sensor 210 is adapted to register a tilt angle of the arrangement 125 in relation to the reference plane P_{ref}. In order to register the tilt angle the tilt sensor 210 may include an IC (integrated circuit) accelerometer, which preferably has a rather good sensitivity, say in the order of ±1 g. The tilt sensor 210 is also adapted to produce a trigger signal Sₜᵣ if the registered tilt angle exceeds a threshold angle in relation to the reference plane P_{ref}. The alarm signal generator 220 is adapted to receive the trigger signal Sₜᵣ, and in response thereto activate an alarm A. The alarm A, in turn, may imply a multitude of actions, such as sounding sirens, flashing the vehicle's lights, transmitting radio messages etc. As will be described below with reference to figure 5, the trigger signal Sₜᵣ may also be processed according to a filtering algorithm, so that the risk of false alarms is reduced.

Figure 3 illustrates how the threshold angle α_{T} and the reference plane P_{ref} are used to determine if the basic trigger signal Sₜᵣ should be generated.

Here, a stationary motor vehicle 100 is equipped with a cab 130, which includes a tilt detection arrangement 125 according to the invention. Furthermore, it is presumed that the arrangement 125 is set. Therefore, a tilt angle α is registered, which reflects the tilting of the cab 130 in relation to the reference plane P_{ref}. For reasons of a clear presentation, figure 3 also shows a secondary reference line which is shifted 90 degrees to the reference plane P_{ref} in respect of which the tilt angle α is measured. Yet another line illustrates the threshold angle α_{T}, i.e. the tilt angle α which causes the trigger signal Sₜᵣ to be generated. As mentioned above, the trigger signal, in turn, forms a basis for the alarm signal A.

The reference plane P_{ref} represents the frame rail.

Returning now to figure 2, according to an embodiment of the invention, the tilt sensor 210 is adapted to compensate for any biasing of the reference plane P_{ref} in relation to a horizontal plane Pₘₛₗ, i.e. a plane which is parallel to the mean sea level.

Figure 4a shows first a example of how this compensation is performed according to an embodiment of the invention. Here, a vehicle 100 is parked in an uphill slope at angle β₁. In connection with setting the arrangement 125 in an active state, the tilt sensor 210 registers an initial (zero) inclination in relation to the horizontal plane Pₘₛₗ when the vehicle 100 is stationary. Of course, this initial inclination is β₁. The tilt sensor 210 then stores the initial inclination value (i.e. β₁), so that this angle can be subtracted from any later registered tilt angle α in relation to the horizontal plane Pₘₛₗ. Consequently, the tilt sensor 210 may produce the trigger signal Sₜᵣ when the threshold angle α_{T} is reached in relation to the reference plane P_{ref}. In other words, the trigger signal Sₜᵣ is produced when the tilt angle α reaches the value α_{T}-β₁ in relation to the horizontal plane Pₘₛₗ.

Figure 4b shows a second example of how a biasing of the reference plane P_{ref} relative to horizontal plane Pₘₛₗ may be compensated for according to an embodiment of the invention. Now, the vehicle 100 is instead parked in a downhill slope at angle β₂. Therefore, the registered initial inclination in relation to the horizontal plane Pₘₛₗ becomes -β₂, and a total angle of α_{T}+β₂ relative to the horizontal plane Pₘₛₗ must be reached before the trigger signal Sₜᵣ is produced. Again, this corresponds to a tilt angle α_{T} between the arrangement 125 and the reference plane P_{ref}.

The figures 4a and 4b illustrate a general compensation strategy for up- and downhill slopes. However, the invention may also compensate for any initial lateral inclination angles of the arrangement 125, such that the trigger signal Sₜᵣ is generated fully independent from the vehicle's 100 spatial orientation.

Figure 5 is a graph which exemplifies when the alarm A is activated according to an embodiment of the invention, wherein a filtering algorithm is used to reduce the risk of false alarms. Namely, if a relatively small threshold angle α_{T} is defined, passing vehicles may generate gusts of wind that temporarily cause the module in which the proposed arrangement is mounted to tilt such that a tilt angle in excess of the threshold angle α_{T} is registered, and thus a signal Sₜᵣ is produced. Similar situations may occur in windy weather, or when the vehicle is transported, for example on a ferry.

Therefore, according to the invention, the trigger signal Sₜᵣ is processed according to a filtering algorithm, and the alarm A is activated in response to the result of this processing. The filtering algorithm in volves activating the alarm A only if the trigger signal Sₜᵣ indicates that the threshold angle α_{T} has been exceeded during a predetermined interval Tₘᵢₙ. It is preferable if the predetermined interval Tₘᵢₙ depends on the threshold angle α_{T}, such that a relatively small threshold angle α_{T} requires a comparatively long predetermined interval Tₘᵢₙ, and vice versa. However, according to the invention, any combination of threshold angle α_{T} and predetermined interval Tₘᵢₙ is conceivable. In a typical truck application where the arrangement 125 is associated with an ECU located in a tiltable cab, a threshold angle α_{T} in the order of 8 to 20 degrees, preferably around 12 degrees, and a predetermined interval Tₘᵢₙ of 0,5 to 2 seconds may be appropriate in order to avoid most false alarms.

In figure 5, the tilt angle α is represented along the vertical axis of the diagram, and the horizontal axis shows the time t. We here presume that the tilt angle α increases rapidly at t=0, and at a first point in time t₁ the threshold angle α_{T} is reached. However, at a second point in time t₂, the tilt angle α again falls below the threshold angle α_{T}, and the time difference between t₁ and t₂ is less than the predetermined interval Tₘᵢₙ. Therefore, the alarm A is not activated even though between t₁ and t₂ the trigger signal Sₜᵣ is generated.

At yet a later and third point in time t₃ the threshold angle α_{T} is reached once more, and this time the predetermined interval Tₘᵢₙ expires at a fourth point in time t₄ while the tilt angle α still exceeds the threshold angle α_{T}. Consequently, at the fourth point in time t₄, the alarm A is activated.

Returning again to figure 2, a processing of the trigger signal Sₜᵣ is accomplished by means of a filter unit 225 in the alarm signal generator 220. The filter unit 225 receives the trigger signal Sₜᵣ, processes the trigger signal Sₜᵣ according to a filtering algorithm (e.g. along the above strategy) and activates the alarm A in response to the result of said processing.

In order to sum up, the general method according to the invention will now be described with reference to the flow diagram of figure 6.

A first step 610 registers a tilt angle α of a monitored vehicle cab . A subsequent step 620 checks whether the registered tilt angle α exceeds a threshold angle α_{T}, and if so a step 630 follows. Otherwise, the procedure loops back to the step 610.

The step 630 generates a trigger signal to indicate that an alarm condition has been fulfilled. Then, follows a step 640 in which an alarm is activated. According to the invention, the step 640 involves a filtering of the trigger signal, such that the alarm is only activated if the trigger signal indicates that the tilt angle α has exceeded the threshold angle α_{T} during a during a predetermined interval.

All of the process steps, as well as any sub-sequence of steps, described with reference to the figure 6 above may be controlled by means of a programmed computer apparatus. The embodiments of the invention described above with reference to the drawings comprise computer apparatus and processes performed in computer apparatus. The program recorded on a computer readable medium may be in the form of source code, object code, a code intermediate source and object code such as in partially compiled form, or in any other form suitable for use in the implementation of the process according to the invention. The carrier may be any entity or device capable of carrying the program. For example, the carrier may comprise a storage medium, such as a Flash memory, a ROM (Read Only Memory), for example a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The invention is not restricted to the described embodiments in the figures, but may be varied freely within the scope of the claims.

## Claims

1. An arrangement (125) for detecting an unauthorized tilting of a tiltable cab (130) of a stationary truck (100), the arrangement comprising:
a tilt sensor (210) adapted to
register a tilt angle (α) of the cab (130) in relation to a frame rail reference plane (P_{ref}), and
produce a trigger signal (Sₜᵣ) if the tilt angle (a) exceeds a threshold angle (α_{T}) in relation to the frame rail reference plane (P_{ref}), and
an alarm signal generator (220) adapted to activate an alarm (A) in response to the trigger signal (Sₜᵣ),
wherein the alarm signal generator (220) comprises a filter unit (225)
which is adapted to
receive the trigger signal (Sₜᵣ),
process the trigger signal (Sₜᵣ) according to a filtering algorithm, and
activate the alarm (A) in response to a result of the processing according to a filtering algorithm such that the alarm (A) is activated only if the trigger signal (Sₜᵣ) indicates that the threshold angle (α_{T}) has been exceeded during a predetermined interval (Tₘᵢₙ).

2. An arrangement (125) according to claim 1,
**characterized in that** the tilt sensor (210) is adapted to compensate for any biasing of the frame rail reference plane (P_{ref}) in relation to a horizontal plane (Pₘₛₗ) being parallel to the mean sea level, such that the tilt sensor (210) produces the trigger signal (Sₜᵣ) irrespective of the vehicle's (100) spatial orientation.

3. A motor vehicle (100), **characterized in that** it comprises the arrangement (125) according to claim 1.

4. A method of detecting, an unauthorized tilting of a tiltable cab (130) of a stationary truck (100), the method comprising:
registering a tilt angle (α) of the cab (130) in relation to a frame rail reference plane (P_{ref}),
producing a trigger signal (Sₜᵣ) if the tilt angle (α) exceeds a threshold angle (α_{T}), and
activating an alarm (A) in response to the trigger signal (Sₜᵣ),
processing the trigger signal (Sₜᵣ) according to a filtering algorithm, and
activating the alarm (A) in response to a result of the processing such that the alarm (A) is activated only if the trigger signal (Sₜᵣ) indicates that the threshold angle (α_{T}) has been exceeded during a predetermined interval (Tₘᵢₙ).

5. A method according to claim 4, whereby the method involves compensating for any biasing of the frame rail reference plane (P_{ref}) in relation to a horizontal plane (Pₘₛₗ) being parallel to the mean sea level.

6. A computer readable medium, having a program recorded thereon, where the program is to make a computer control the steps of any of the claims 4 or 5.

## Patentansprüche

1. Anordnung (125) zum Erfassen eines unzulässigen Kippens eines kippbaren Fahrerhauses (130) eines stationären Lastkraftwagens (100), wobei die Baueinheit aufweist:
einen Kippsensor (210), der dazu eingerichtet ist, einen Kippwinkel (α) des Fahrerhauses (130) relativ zu einer Referenzebene (P_{ref}) des Chassis-Längsträgers zu registrieren, und
ein Auslösesignal (Sₜᵣ) zu erzeugen, wenn der Kippwinkel (α) einen Schwellenwinkel (α_{T}) relativ zur Referenzebene (P_{ref}) des Chassis-Längsträgers überschreitet, und einen Alarmsignalgenerator (220), der dazu eingerichtet ist, einen Alarm (A) als Antwort auf das Auslösesignal (Sₜᵣ) zu aktivieren,
wobei der Alarmsignalgenerator (220) eine Filtereinheit (225) aufweist, die dazu eingerichtet ist,
das Auslösesignal (Sₜᵣ) zu empfangen,
das Auslösesignal (Sₜᵣ) gemäß einem Filterungsalgorithmus zu verarbeiten, und
den Alarm (A) als Antwort auf das Ergebnis der Verarbeitung gemäß einem Filterungsalgorithmus auf eine solche Weise zu aktivieren, dass der Alarm (A) nur dann aktiviert wird, wenn das Auslösesignal (Sₜᵣ) meldet, dass der Schwellenwinkel (α_{T}) während eines vorgegebenen Intervalls (Tₘᵢₙ) überschritten worden ist.

2. Anordnung (125) nach Anspruch 1,
**dadurch gekennzeichnet, dass** der Kippsensor (210) dazu eingerichtet ist, jegliche Vorbelastung der Referenzebene (P_{ref}) des Chassis-Längsträgers relativ zu einer waagrechten Ebene (Pₘₛₗ), die parallel zu Normalnull verläuft, auszugleichen, so dass der Kippsensor (210) das Auslösesignal (Sₜᵣ) ungeachtet der räumlichen Orientierung des Fahrzeugs (100) erzeugt.

3. Kraftfahrzeug (100), **dadurch gekennzeichnet, dass** es die Anordnung (125) gemäß Anspruch 1 aufweist.

4. Verfahren zum Erkennen eines unzulässigen Kippens eines kippbaren Fahrerhauses (130) eines stationären Lastkraftwagens (100), wobei das Verfahren aufweist:
Registrieren eines Kippwinkels (α) des Fahrerhauses (130) relativ zu einer Referenzebene (P_{ref}) des Chassis-Längsträgers,
Erzeugen eines Auslösesignals (Sₜᵣ), wenn der Kippwinkel (α) einen Schwellenwinkel (α_{T}) überschreitet, und
Aktivieren eines Alarms (A) als Antwort auf das Auslösesignal (Sₜᵣ),
Verarbeiten des Auslösesignal (Sₜᵣ) gemäß einem Filterungsalgorithmus, und
Aktivieren des Alarms (A) als Antwort auf das Ergebnis der Verarbeitung auf eine solche Weise, dass der Alarm (A) nur dann aktiviert wird, wenn das Auslösesignal (Sₜᵣ) meldet, dass der Schwellenwinkel (α_{T}) während eines vorgegebenen Intervalls (Tₘᵢₙ) überschritten worden ist.

5. Verfahren nach Anspruch 4, wobei das Verfahren die Kompensation jeglicher Vorbelastung der Referenzebene (P_{ref}) des Chassis-Längsträgers relativ zu einer waagrechten Ebene (Pₘₛₗ), die parallel zu Normalnull verläuft, beinhaltet.

6. Computerlesbares Medium mit einem darauf aufgezeichneten Programm, wobei das Programm einen Computer veranlasst, die Schritte eines der Ansprüche 4 oder 5 zu steuern.

## Revendications

1. Agencement (125) pour détecter un basculement non autorisé d'une cabine basculante (130) d'un camion (100) à l'arrêt, l'agencement comprenant :
un détecteur de basculement (210) adapté à
enregistrer un angle de basculement (α) de la cabine (130) par rapport à un plan de référence (P_{ref}) de longeron de cadre de châssis, et
produire un signal de déclenchement (Sₜᵣ) si l'angle de basculement (α) excède un angle de seuil (α_{T}) par rapport au plan de référence (P_{ref}) de longeron de cadre de châssis, et
un générateur de signal d'alarme (220) adapté à activer une alarme (A) en réponse au signal de déclenchement (Sₜᵣ),
dans lequel le générateur de signal d'alarme (220) comprend une unité de filtre (225) qui est adaptée à
recevoir le signal de déclenchement (Sₜᵣ),
traiter le signal de déclenchement (Sₜᵣ) conformément à un algorithme de filtrage, et
activer l'alarme (A) en réponse à un résultat du traitement conformément à un algorithme de filtrage de telle manière que l'alarme (A) n'est activée que si le signal de déclenchement (Sₜᵣ) indique que l'angle de seuil (α_{T}) a été excédé sur un intervalle prédéterminé (Tₘᵢₙ).

2. Agencement (125) selon la revendication 1,
**caractérisé en ce que** le détecteur de basculement (210) est adapté à compenser un quelconque décalage du plan de référence (P_{ref}) de longeron de cadre de châssis par rapport à un plan horizontal (Pₘₛₗ) étant parallèle au niveau moyen de la mer, de telle manière que le détecteur de basculement (210) produit le signal de déclenchement (Sₜᵣ) quelle que soit l'orientation spatiale du véhicule (100).

3. Véhicule motorisé (100), **caractérisé en ce qu'**il comprend l'agencement (125) selon la revendication 1.

4. Procédé de détection d'un basculement non autorisé d'une cabine basculante (130) d'un camion (100) à l'arrêt, le procédé comprenant :
l'enregistrement d'un angle de basculement (α) de la cabine (130) par rapport à un plan de référence (P_{ref}) de longeron de cadre de châssis,
la production d'un signal de déclenchement (Sₜᵣ) si l'angle de basculement (α) excède un angle de seuil (α_{T}), et
l'activation d'une alarme (A) en réponse au signal de déclenchement (Sₜᵣ), le traitement du signal de déclenchement (Sₜᵣ) conformément à un algorithme de filtrage, et
l'activation de l'alarme (A) en réponse à un résultat du traitement de telle manière que l'alarme (A) n'est activée que si le signal de déclenchement (Sₜᵣ) indique que l'angle de seuil (α_{T}) a été excédé sur un intervalle prédéterminé (Tₘᵢₙ).

5. Procédé selon la revendication 4, dans lequel le procédé inclut la compensation d'un quelconque décalage du plan de référence (P_{ref}) de longeron de cadre de châssis par rapport à un plan horizontal (Pₘₛₗ) étant parallèle au niveau moyen de la mer.

6. Support lisible par un ordinateur, ayant un programme enregistré sur celui-ci, où le programme sert à ce qu'un ordinateur commande les étapes de l'une quelconque des revendications 4 ou 5.
